# FASCICULE DE BREVET EUROPEEN

(11) **EP 1 172 261 B1**
(45) Date de publication et mention de la délivrance du brevet: **01.10.2003**
(21) Numéro de dépôt: 01401784.2
(22) Date de dépôt: 04.07.2001
(51) Int. Cl.: B60R 19/20

(54) **Dispositif d'échappement d'un élément gonflable et dispositif de protection d'un véhicule contre le choc équipé d'un tel dispositif d'échappement**
Entlüftungsvorrichtung eines aufblasbaren Elements und Aufprallschutzeinrichtung für ein Fahrzeug mit einer derartigen Vorrichtung
Venting means for an inflatable element and vehicle protection device provided with same

(30) Priorité: 12.07.2000 FR 0009147
(43) Date de publication de la demande: 16.01.2002
(73) Titulaire: Alstom, 75116 Paris (FR)
(72) Inventeur: Demarquilly, Francis, 17140 Lagord (FR); Laporte, Jean-Jacques, 17000 La Rochelle (FR)
(74) Mandataire: de Lambilly Delorme, Marie Pierre

(56) Documents cités:
- DE-A- 2 330 745
- FR-A- 2 420 456
- GB-A- 2 291 244
- US-A- 5 106 137
- US-A- 5 366 242
- US-A- 6 053 664

## Description

L'invention se rapporte à un dispositif d'échappement d'un élément gonflable pour la protection d'un véhicule contre le choc présentant, une fois gonflé, une forme générale épousant la forme générale de la zone du véhicule à protéger et à un dispositif de protection d'un véhicule contre le choc comportant un élément gonflable muni d'un tel dispositif d'échappement. Le dispositif d'échappement selon l'invention s'applique de préférence aux dispositifs de protection contre les chocs du domaine ferroviaire, pour lesquels l'élément gonflable de protection est particulièrement volumineux.

Les coussins gonflables de protection disposés à l'avant des véhicules ferroviaires, tels que divulgués dans la publication FR 2 764 855 de la demanderesse pour amortir le choc lors d'un impact avec un obstacle, présentent la particularité de posséder un volume important et donc de nécessiter l'injection d'une très grande quantité de gaz, sous forte pression, pour assurer un déploiement rapide du coussin gonflable. Or, les coussins gonflables sont munis d'orifices d'échappement permettant la libération progressive du gaz lors du choc, afin d'absorber l'énergie de l'impact, qui présentent toutefois l'inconvénient de laisser échapper une partie du gaz lors de la phase de remplissage du coussin gonflable, contribuant ainsi à augmenter encore la quantité de gaz nécessaire au déploiement du coussin gonflable.

Il est connu, en particulier dans le domaine automobile, de remédier à cet inconvénient en disposant une membrane sur les orifices d'échappement du coussin gonflable afin d'obturer ces derniers lors de la phase de gonflage du coussin de protection, la membrane étant adaptée pour se déchirer sous la surpression du au choc pour permettre la libération du gaz et l'amortissement du choc. Une telle solution est divulguée dans la publication FR 1 571 387. Toutefois, cette solution n'est pas applicable aux coussins de protection des véhicules ferroviaires pour lesquels le volume est très important ce qui nécessite, pour obtenir un déploiement rapide, une très forte pression de gonflage qui provoque, dès la phase de gonflage, la rupture des membranes obturant les orifices d'échappement. Par ailleurs, le renforcement des membranes pour éviter leur rupture prématurée lors de la phase de gonflage conduirait à diminuer les capacités d'absorption d'énergie du coussin gonflable, en particulier lors des petits chocs, en augmentant le seuil de pression à partir duquel le gaz peut s'échapper du coussin. Or, il est important, pour obtenir un bon effet de protection, que le coussin gonflable soit parfaitement gonflé avant le choc mais se relâche dès le début du choc pour éviter que le coussin gonflable ne se déforme que pratiquement élastiquement lors du choc, avec un être humain par exemple, et réaccélère ce dernier en sens inverse après le choc, avec une force de valeur correspondante.

Il est également connu, du document US 5 106 137, un pare-chocs pour véhicule comprenant un élément gonflable comportant une ouverture pour l'échappement des gaz munie d'une soupape associée à un ajutage, la soupape permettant la libération des gaz à partir d'une pression donnée et l'ajutage permettant la régulation du débit des gaz d'échappement. Toutefois, un tel dispositif présente le même inconvénient que le dispositif précédent, c'est à dire qu'un gonflage rapide sous forte pression du coussin gonflable oblige à adopter une soupape d'échappement tarée pour une très forte pression, ce qui diminue les capacités d'absorption d'énergie du coussin gonflable, en particulier lors des petits chocs, en augmentant le seuil de pression à partir duquel le gaz peut s'échapper du coussin.

Le but de la présente invention est donc de proposer un dispositif d'échappement et un dispositif de protection muni d'un tel dispositif d'échappement qui assure le gonflage de l'élément de protection sans fuite de gaz afin d'optimiser le déploiement de l'élément gonflable, et qui assure également l'échappement progressif du gaz dès le début du choc, et ce quelle que soit la violence du choc.

A cet effet, l'invention a pour objet un dispositif d'échappement d'un élément gonflable pour la protection d'un véhicule contre le choc présentant, une fois gonflé, une forme générale épousant la forme générale de la zone du véhicule à protéger, l'élément gonflable étant maintenu, à l'état plié, dans un compartiment et comportant une ouverture dont le bord est relié de manière étanche à une paroi du compartiment, caractérisé en ce que la paroi comporte, en regard de l'ouverture, des moyens d'échappement des gaz qui sont protégés par un volet obturateur durant la phase de gonflage de l'élément gonflable, le volet étant commandé par des moyens actionneur assurant l'effacement du volet obturateur lorsque l'élément gonflable est déployé.

Selon des modes particuliers de réalisation, le dispositif d'échappement peut comprendre l'une ou plusieurs des caractéristiques suivantes prises isolément ou selon toutes les combinaisons techniquement possibles :
- le volet obturateur est actionné par une commande pyrotechnique ou électrique ;
- les moyens d'échappement sont constitués d'un ou plusieurs orifices d'échappement munis d'une membrane, cette dernière étant adaptée pour se déchirer lors d'une surpression créée par le choc d'un objet sur l'élément gonflable ;
- le volet est commandé à partir d'une temporisation établie par rapport au déclenchement initial des moyens de gonflage ;

L'invention concerne également un dispositif de protection d'un véhicule contre le choc comportant un élément gonflable présentant, une fois gonflé, une forme générale épousant la forme générale de la zone du véhicule à protéger, l'élément gonflable étant maintenu à l'état plié dans un compartiment comportant une paroi reliée de manière étanche à une ouverture dudit élément gonflable, caractérisé en ce que la paroi comporte, en regard de l'ouverture, un orifice débouchant sur des moyens de gonflage et comporte des moyens d'échappement des gaz qui sont protégés par un volet obturateur durant la phase de gonflage de l'élément gonflable, le volet étant commandé par des moyens actionneur assurant l'effacement du volet obturateur lorsque l'élément gonflable est déployé.

Selon des modes particuliers de réalisation, le dispositif de protection peut comprendre l'une ou plusieurs des caractéristiques suivantes prises isolément ou selon toutes les combinaisons techniquement possibles :
- le véhicule est un véhicule ferroviaire ;
- les moyens de gonflage sont constitués par un réservoir de gaz sous très haute pression

On comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :
- La figure 1 est une vue de côté, schématique, d'un véhicule ferroviaire équipé d'un dispositif de protection comportant un coussin gonflable muni d'un dispositif d'échappement selon l'invention, lorsque le coussin gonflable est à l'état plié;
- La figure 2 est une vue en coupe suivant la ligne II-II similaire de la figure 1 ;
- La figure 3 est une vue similaire à la figure 2 pendant la phase de gonflage du coussin gonflable de protection ;
- La figure 4 est une vue similaire à la figure 3, peu de temps après ;
- La figure 5 est une vie similaire à la figure 4 lors du choc.

Pour faciliter la lecture du dessin, seuls les éléments nécessaires à la compréhension de l'invention ont été représentés.

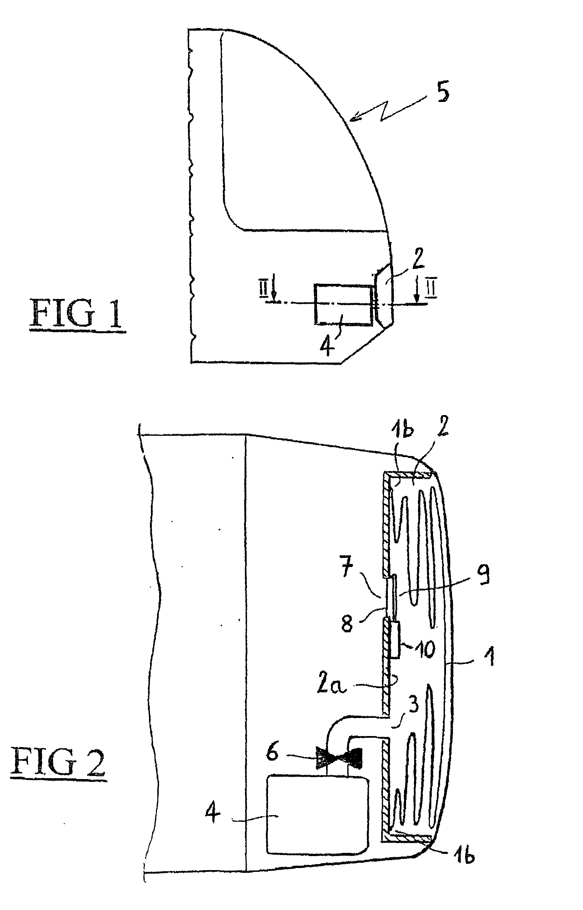

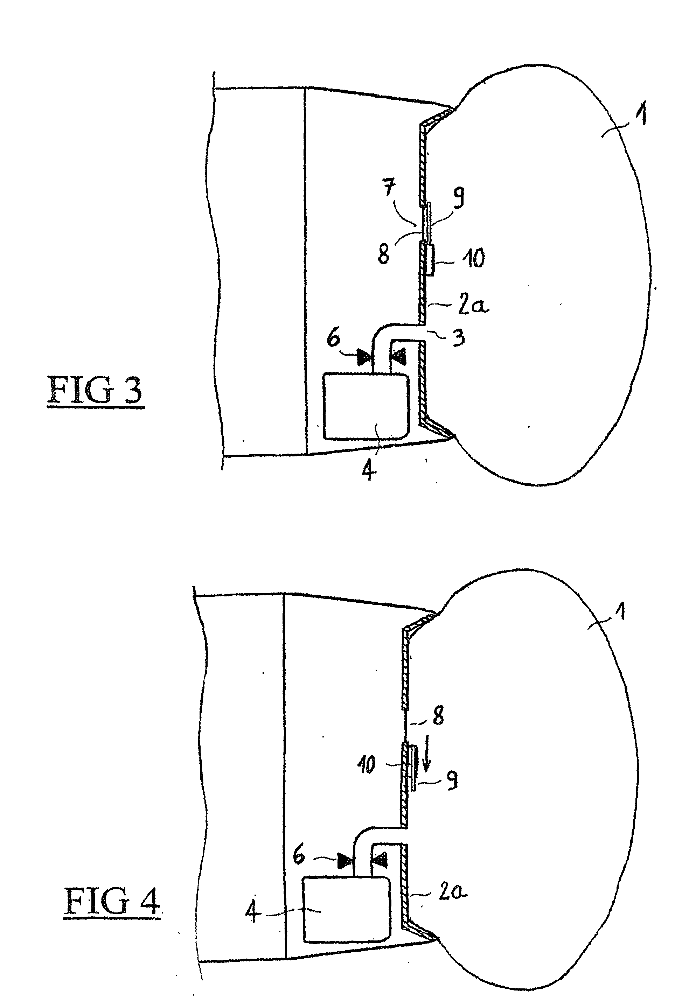

Les figures 1 et 2 représentent un véhicule ferroviaire 5, de type tramway, équipé d'un dispositif de protection contre les chocs constitué d'un coussin gonflable 1 de grand volume qui, à l'état plié, est rangé dans un compartiment 2 de la face avant du tramway 5.

Le coussin gonflable 1 comporte une ouverture disposée en regard de la paroi frontale 2a du compartiment 2 dont le bord 1b est relié de manière étanche à la paroi 2a. La paroi 2a du compartiment comporte, en regard de l'ouverture du coussin gonflable 1, un orifice 3 débouchant sur une canalisation reliée à un réservoir 4 de gaz comprimé assurant la mise sous pression du coussin gonflable 1 sous le contrôle d'une vanne 6 à ouverture pyrotechnique ou électrique.

Conformément à la figure 2, la paroi 2a du compartiment 2 comporte également un orifice d'échappement 7 mettant en communication l'intérieur du coussin gonflable 1 avec l'air extérieur du tramway 5. L'orifice d'échappement 7 est obturé par une membrane 8 qui est protégée, du coté de l'intérieur du coussin gonflable 1, par un volet obturateur 9 mobile relié à une commande 10 pyrotechnique ou électrique. Le volet obturateur 9 est représenté sur la figure 2 en position fermée, c'est à dire qu'il vient obturer de manière étanche l'orifice d'échappement 7.

Le fonctionnement du dispositif de protection associé au dispositif d'échappement selon l'invention va maintenant être décrit.

Sous des conditions de service normal, le coussin gonflable 1 se trouve à l'état plié dans la partie avant du tramway 5 à l'intérieur du compartiment 2 prévu à cet effet.

Lorsque qu'un risque de collision est détecté, soit de manière automatique, soit par la suite de l'intervention d'un mécanicien, le gaz comprimé du réservoir 4 est injecté brutalement, sous forte pression et fort débit, dans le coussin gonflable 1 par l'ouverture de la vanne 6 ainsi que cela est représenté sur la figure 3. Durant cette phase de gonflage du coussin 1 de protection, le volet obturateur 9 est maintenu fermé de manière à assurer l'étanchéité du coussin gonflable 1 et à protéger la membrane 8 de la forte pression instantanée qui est générée par l'arrivée brutale de gaz dans le coussin gonflable 1 pour assurer son déploiement rapide.

Après une temporisation de quelques dixièmes de secondes, correspondant au temps nécessaire pour le déploiement complet du coussin gonflable 1, un signal est envoyé à la commande 10 du volet obturateur 9 afin de provoquer l'ouverture instantanée du volet 9 comme cela est représenté à la figure 4. Le coussin gonflable 1 étant en position déployé, la pression à l'intérieur du coussin 1 est alors relativement faible, le réservoir 4 de gaz s'étant vidé, et la membrane 8 assure l'étanchéité du coussin gonflable 1 sous faible pression.

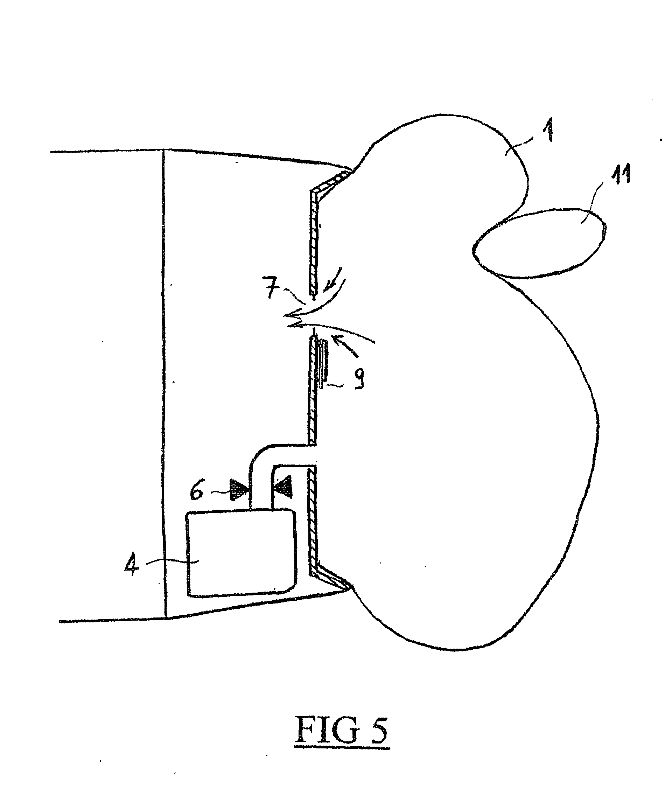

Lorsque que le tramway 5 vient heurter un obstacle 11, la surpression créée à l'intérieur du coussin gonflable 1 provoque alors la rupture instantanée de la membrane 8 qui permet alors l'expulsion progressive du gaz contenu dans le coussin 1 vers l'extérieur au travers de l'orifice d'échappement 7 et l'amortissement du choc ainsi que cela est représenté à la figure 5.

Un tel dispositif d'échappement équipant un dispositif de protection permet donc d'effectuer un gonflage très rapide de l'élément gonflable grâce à la pression et au débit très important de gaz qui peuvent être utilisés pour générer le déploiement de l'élément gonflable sans risque de fuite par le ou les orifices d'échappement. Une fois l'élément gonflable déployé, la pression étant stabilisée à une faible valeur, la membrane fermant l'orifice d'échappement assure alors un parfait maintien de l'élément gonflable jusqu'au choc évitant ainsi que ce dernier ne se dégonfle préalablement au choc et perde ainsi de son pouvoir d'absorption. La membrane fermant l'orifice d'échappement étant dimensionnée pour se déchirer pour une faible surpression, cette dernière se rompt des l'impact du choc ce qui permet d'amortir sans risque de rebond des objets présentant une faible inertie.

Par ailleurs, la parfaite étanchéité de l'élément gonflable lors de la phase de gonflage permet également de réduire le volume du réservoir assurant le gonflage de l'élément de protection et donc de réduire son poids et son encombrement ce qui constitue un avantage important.

## Revendications

1. Dispositif d'échappement d'un élément gonflable (1) pour la protection d'un véhicule (5) contre le choc présentant, une fois gonflé, une forme générale épousant la forme générale de la zone du véhicule (5) à protéger, ledit élément gonflable (1) étant maintenu, à l'état plié, dans un compartiment (2) et comportant une ouverture dont le bord (1b) est relié de manière étanche à une paroi (2a) dudit compartiment (2), ladite paroi (2a) comportant, en regard de ladite ouverture, des moyens d'échappement (7) des gaz, **caractérisé en ce que** lesdits moyens d'échappement (7) sont protégés par un volet obturateur (9) durant la phase de gonflage dudit élément gonflable (1), un signal étant envoyé à des moyens actionneur (10) commandant ledit volet (9) pour assurer l'effacement dudit volet obturateur (9) lorsque l'élément gonflable (1) est déployé.

2. Dispositif d'échappement d'un élément gonflable (1) pour la protection d'un véhicule selon la revendication 1, **caractérisé en ce que** ledit volet obturateur (9) est actionné par une commande (10) pyrotechnique ou électrique.

3. Dispositif d'échappement d'un élément gonflable (1) pour la protection d'un véhicule selon l'une quelconque des revendications 1 à 2, **caractérisé en ce que** lesdits moyens d'échappement sont constitués d'un ou plusieurs orifices d'échappement (7) munis d'une membrane (8), ladite membrane (8) étant adaptée pour se déchirer lors d'une surpression créée par le choc d'un objet sur l'élément gonflable (1).

4. Dispositif d'échappement d'un élément gonflable (1) pour la protection d'un véhicule selon l'une quelconque des revendications 1 à 3, **caractérisé en ce que** ledit volet (7) est commandé à partir d'une temporisation établie par rapport au déclenchement initial des moyens de gonflage (1).

5. Dispositif de protection d'un véhicule (5) contre le choc comportant un élément gonflable (1) présentant, une fois gonflé, une forme générale épousant la forme générale de la zone du véhicule à protéger, ledit élément gonflable (1) étant maintenu à l'état plié dans un compartiment (2) comportant une paroi (2a) reliée de manière étanche à une ouverture dudit élément gonflable (1), **caractérisé en ce que** ladite paroi (2a) comporte, en regard de ladite ouverture, un orifice (3) débouchant sur des moyens (4) de gonflage et comporte un dispositif d'échappement des gaz selon l'une quelconque des revendications 1 à 4.

6. Dispositif de protection selon la revendication 5, **caractérise en ce que** ledit véhicule (5) est un véhicule ferroviaire.

7. Dispositif de protection selon la revendication 6, **caractérisé en ce que** lesdits moyens de gonflage sont constitués par un réservoir (4) de gaz sous très haute pression.

## Patentansprüche

1. Gasausströmvorrichtung für ein aufblasbares Element (1) zum Schutz eines Fahrzeugs (5) bei einem Aufprall, welches Element sich nach dem Aufblasen im Wesentlichen der Form des zu schützenden Bereichs des Fahrzeugs (5) anpasst, wobei das aufblasbare Element (1) im zusammengelegten Zustand in einem Fach (2) gehalten wird und eine Öffnung aufweist, deren Rand (1b) dicht abschließend mit einer Wand (2a) des Fachs (2) verbunden ist, welche Wand (2a) gegenüber dieser Öffnung Vorrichtungen zum Ausströmen (7) von Gas aufweist, **dadurch gekennzeichnet, dass** die Vorrichtungen zum Ausströmen (7) während der Aufblasphase des aufblasbaren Elements (1) durch eine Verschlussklappe (9) geschützt sind, wobei ein Signal an Betätigungsmittel (10) gesandt wird, welche die Klappe (9) steuern, um ein Versenken dieser Verschlussklappe (9) zu bewirken, wenn das aufblasbare Element (1) entfaltet ist.

2. Gasausströmvorrichtung für ein aufblasbares Element (1) zum Schutz eines Fahrzeugs nach Anspruch 1, **dadurch gekennzeichnet, dass** die Verschlussklappe (9) durch eine pyrotechnische oder elektrische Steuerung (10) betätigt wird.

3. Gasausströmvorrichtung für ein aufblasbares Element (1) zum Schutz eines Fahrzeugs nach einem der Ansprüche 1 bis 2, **dadurch gekennzeichnet, dass** die Ausströmvorrichtungen von einer oder mehreren Ausströmöffnungen (7) gebildet werden, die mit einer Membran (8) versehen sind, welche Membran (8) geeignet ist, bei einem durch das Aufprallen eines Objekts auf das aufblasbare Element (1) erzeugten Unterdruck zu reißen.

4. Gasausströmvorrichtung für ein aufblasbares Element (1) zum Schutz eines Fahrzeugs nach einem der Ansprüche 1 bis 3, **dadurch gekennzeichnet, dass** die Klappe (7) über eine Verzögerungszeit bezogen auf die ursprüngliche Auslösung der Vorrichtungen zum Aufblasen (1) gesteuert wird.

5. Schutzvorrichtung für ein Fahrzeug (5) gegen Stöße, die ein aufblasbares Element (1) aufweist, das sich im aufgeblasenen Zustand im Wesentlichen der Form des zu schützenden Bereichs des Fahrzeugs (5) anpasst, wobei das aufblasbare Element (1) im zusammengelegten Zustand in einem Fach (2) gehalten wird, das eine Wand (2a) aufweist, die dicht abschließend mit einer Öffnung des aufblasbaren Elements (1) verbunden ist, **dadurch gekennzeichnet, dass** die Wand (2a) gegenüber der Öffnung eine Mündungsöffnung (3) aufweist, die zu Aufblasvorrichtungen (4) hin mündet und eine Gasausströmvorrichtung nach einem der Ansprüche 1 bis 4 umfasst.

6. Schutzvorrichtung nach Anspruch 5, **dadurch gekennzeichnet, dass** das Fahrzeug (5) ein Schienenfahrzeug ist.

7. Schutzvorrichtung nach Anspruch 6, **dadurch gekennzeichnet, dass** die Aufblasvorrichtungen von einem Behälter (4) mit unter sehr hohem Druck stehenden Gas gebildet wird.

## Claims

1. A release device for releasing an inflatable element (1) for protecting a vehicle (5) against impact, which element, once inflated, presents a general shape that fits closely over the region of the vehicle (5) to be protected, said inflatable element (1) being held, in a folded state, in a compartment (2) and including an opening having an edge (1b) that is connected in sealed manner to a wall (2a) of said compartment (2), said wall (2a) including gas release means (7) facing said opening, the release device being **characterized in that** the release means (7) are protected during inflation of the inflatable element (1) by a closure flap (9), a signal being sent to actuator means (10) controlling said flap (9) so as to remove said closure flap (9) once the inflatable element (1) is deployed.

2. A release device according to claim 1 for releasing an inflatable element (1) for protecting a vehicle, the release device being **characterized in that** said closure flap (9) is actuated by pyrotechnical or electrical control means (10).

3. A release device according to claim 1 or 2 for releasing an inflatable element (1) for protecting a vehicle, the release device being **characterized in that** said release means are constituted by one or more membrane-fitted release orifices (7), said membrane(s) (8) being designed to tear when excess pressure is created by an object impacting on the inflatable element (1).

4. A release device according to any one of claims 1 to 3 for releasing an inflatable element (1) for protecting a vehicle, the release device being **characterized in that** said flap (7) is removed after a time delay has elapsed from the initial triggering of the inflatable means (1).

5. A protection device for protecting a vehicle (5) against impact, the protection device including an inflatable element which, once inflated, presents a general shape that fits closely over the region of the vehicle to be protected, said inflatable element (1) being held in a folded state in a compartment (2) that includes a wall (2a) that is connected in sealed manner to an opening of said inflatable element (1), the protection device being **characterized in that**, facing said opening, said wall (2a) includes an orifice (3) opening out to inflating means (4), and includes a gas release device according to any one of claims 1 to 4.

6. A protection device according to claim 5, **characterized in that** said vehicle (5) is a rail vehicle.

7. A protection device according to claim 6, **characterized in that** said inflation means are constituted by a tank (4) of gas under very high pressure.
